# EUROPEAN PATENT SPECIFICATION

(11) **EP 4 228 025 B1**
(45) Date of publication and mention of the grant of the patent: **06.05.2026**
(21) Application number: 23154897.5
(22) Date of filing: 03.02.2023
(51) Int. Cl.: H01M 4/133, H01M 4/134, H01M 4/36, H01M 4/587, H01M 4/38

(54) **NEGATIVE ELECTRODE FOR RECHARGEABLE LITHIUM BATTERY AND RECHARGEABLE LITHIUM BATTERY INCLUDING SAME**
NEGATIVE ELEKTRODE FÜR EINE WIEDERAUFLADBARE LITHIUMBATTERIE UND WIEDERAUFLADBARE LITHIUMBATTERIE DAMIT
ÉLECTRODE NÉGATIVE POUR BATTERIE AU LITHIUM RECHARGEABLE ET BATTERIE AU LITHIUM RECHARGEABLE LA COMPRENANT

(30) Priority: 07.02.2022 KR 20220015774
(43) Date of publication of application: 16.08.2023
(73) Proprietor: Samsung SDI Co., Ltd., Yongin-si, Gyeonggi-do 17084 (KR)
(72) Inventor: Ahn, Won-Gi, 17084 Yongin-si, Gyeonggi-do (KR); Jeong, Min-young, 17084 Yongin-si, Gyeonggi-do (KR); Lee, Taeil, 17084 Yongin-si, Gyeonggi-do (KR); Bae, Juhye, 17084 Yongin-si, Gyeonggi-do (KR); Park, Gwangwon, 17084 Yongin-si, Gyeonggi-do (KR)
(74) Representative: Gulde & Partner

(56) References cited:
- US-A1- 2020 083 536
- US-A1- 2020 176 753
- US-A1- 2021 391 570

## Description

### BACKGROUND OF THE INVENTION

### (a) Field of the Invention

It relates to a negative electrode for rechargeable lithium battery and a rechargeable lithium battery including the same.

### (b) Description of the Related Art

Recently, the rapid spread of electronic devices such as mobile phones, laptop computers, and electric vehicles, using batteries require surprising increases in demands for rechargeable batteries with relatively high capacity and lighter weight. Particularly, a rechargeable lithium battery has recently drawn attention as a driving power source for portable devices, as it has lighter weight and high energy density. Accordingly, researches for improving performances of rechargeable lithium batteries are being actively undertaken.

A rechargeable lithium battery includes a positive electrode and a negative electrode which may include an active material being capable of intercalating and deintercalating lithium ions, and an electrolyte, and generate electrical energy due to an oxidation and reduction reaction when lithium ions are intercalated and deintercalated into the positive electrode and the negative electrode.

As for a positive active material of a rechargeable lithium battery, transition metal compounds such as lithium cobalt oxides, lithium nickel oxides, and lithium manganese oxide are mainly used. As the negative active material, a carbonaceous material such as a crystalline carbon material such as natural graphite or artificial graphite, or an amorphous carbonaceous material, or silicon-based material may be used.

Recently, there have been attempts to thickly prepare a negative active material layer by using a carbonaceous material, especially, by mixing crystalline carbon with a silicon-carbon active material in order to improve a current density of the rechargeable lithium battery. For example, US 2021/0391570 A1 discloses a negative electrode for a lithium secondary battery. The negative electrode includes a current collector; a first negative electrode active material layer disposed on the current collector and includes a first graphite-based active material containing artificial graphite and natural graphite, and a first silicon-based active material; and a second negative electrode active material layer disposed on the first negative electrode active material layer and including a second graphite-based active material containing artificial graphite and natural graphite, and a second silicon-based active material. US 2020/0083536 A1 describes a negative active material for a rechargeable lithium battery based on natural graphite including secondary particles in which a plurality of primary particles are assembled; amorphous carbon on the surface of the primary particles; and a coating layer including amorphous carbon surrounding the secondary particles. US 2020/0176753 A1 relates to a negative electrode for a lithium secondary battery including a negative electrode current collector; a first negative electrode mixture layer present on at least one surface of the negative electrode current collector and including a first carbonaceous negative electrode active material, a first polymer binder and a first conductive material; a second negative electrode mixture layer present on a top surface of the first negative electrode mixture layer and including a silicon-based negative electrode active material, a second polymer binder and a second conductive material; and a third negative electrode mixture layer present on a top surface of the second negative electrode mixture layer and including a second carbonaceous negative electrode active material, a third polymer binder and a third conductive material.

However, it causes to occur the deterioration and expansion of the negative electrode during charging and discharging, thereby fading the cycle-life characteristics and deteriorating the performances.

### SUMMARY OF THE INVENTION

The invention is defined by the appended claims.

One embodiment provides a negative electrode for a rechargeable lithium battery exhibiting excellent cycle-life characteristic and high capability characteristic.

Another embodiment provides a rechargeable lithium battery including the negative electrode.

In a first aspect the present invention provides a negative electrode for a rechargeable lithium battery including a current collector; and a negative active material layer including a first active material layer, a second active material layer, and a third active material layer, wherein the first active material layer is positioned to contact with the current collector and the second active material layer is positioned between the first active material layer and the third active material layer, the first active material layer includes a first active material of first crystalline carbon, the second active material layer includes a second active material which includes a silicon-based active material, a second crystalline carbon and a third crystalline carbon, and third active material layer includes a third active material of a fourth crystalline carbon, wherein silicon is only included in the second active material layer.

An amount of the silicon may be 0.6 wt% to 9 wt% based on the total, 100 wt% of the negative active material layer.

A thickness ratio of the first active material layer, the second active material layer, and the third active material layer may be 1:1 to 49:1 to 49. In one embodiment, a thickness ratio of the first active material layer, the second active material layer, and the third active material layer may be 1:1 to 1.5:1 to 1.5.

The first crystalline carbon and/or the second crystalline carbon may include a natural graphite including secondary particles in which a plurality of primary particle are agglomerated, amorphous carbon positioned on a surface of the primary particle, and a coating layer including amorphous carbon, surrounding the secondary particle. The primary particle may have an average particle diameter D50 of 5 µm to 15 µm, and the secondary particle may have an average particle diameter of 8 µm to 24 µm, a peak intensity ratio I(002)/I(110) may be 120 or less, when XRD is measured.

In one embodiment, a mixing ratio of the second crystalline carbon and the third crystalline carbon may be 1:1 to 1:9 by weight ratio.

The third crystalline carbon may be artificial graphite.

The fourth crystalline carbon may be artificial graphite, natural graphite, or a combination thereof.

According to another embodiment, a rechargeable lithium battery including the negative electrode; a positive electrode, and an electrolyte is provided.

The negative active material according to one embodiment may exhibit excellent cycle-life characteristic and high capability characteristic.

### BRIEF DESCRIPTION OF THE DRAWINGS

FIG. 1 schematically shows the structure of the negative electrode for a rechargeable lithium battery according to one embodiment.
FIG. 2 is a schematic view of a rechargeable lithium battery according to an embodiment.
FIG. 3 is a graph showing the room temperature cycle-life characteristics of the rechargeable lithium cells according to Example 1 and Comparative Examples 1 and 2.

### DETAILED DESCRIPTION OF THE INVENTION

Hereinafter, embodiments of the present invention are described in detail. However, these embodiments are merely examples, the present invention is not limited thereto and the present invention is defined by the scope of claims.

In the specification, a particle diameter may be an average particle diameter of particles. Herein, the average particle diameter may mean a particle diameter D50 measured as a cumulative volume. When a definition is not otherwise provided, such a particle diameter (D50) indicates an average particle diameter (D50) where a cumulative volume is about 50 volume% in a particle distribution.

The average particle size (D50) may be measured by a method well known to those skilled in the art, for example, by a particle size analyzer, or also by a transmission electron microscopic image or a scanning electron microscopic image. Alternatively, a dynamic light-scattering measurement device is used to perform a data analysis, and the number of particles is counted for each particle size range. From this, the average particle diameter (D50) value may be easily obtained through a calculation. The average particle diameter (D50) of the particles may be measured by laser diffraction (LD). The method may be performed according to ISO 13320-1. According to the IUPAC definition, the equivalent diameter of a non-spherical particle is equal to a diameter of a spherical particle that exhibits identical properties to that of the investigated non-spherical particle.

A negative electrode for a rechargeable lithium battery includes a current collector, a negative active material layer positioned on the current collector.

The negative active material layer includes a first active material layer, a second active material layer, and a third active material layer. Herein, the first active material layer is positioned in contact with the current collector, and the second active material layer is positioned between the first active material layer and the third active material layer.

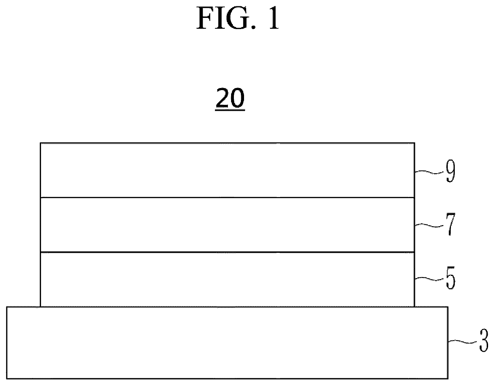

A structure of the negative electrode according to one embodiment will be illustrated in more detail, and based on FIG. 1, the negative electrode 20 of one embodiment includes the second negative active material layer 7 positioned between the first negative active material layer 5 and the third negative active material layer 9. That is, the second negative active material layer 7 is included as a middle layer in the negative electrode, the first negative active material layer 5 is included in the negative electrode in order to direct contact with the current collector 3, and the third negative active material layer 9 is positioned on a surface.

The first negative active material layer includes a first crystalline carbon as a first active material. The second negative active material layer includes a silicon-based active material, a second crystalline carbon, and a third crystalline carbon, as a second active material. The third active material layer includes a fourth crystalline carbon, as a third active material.

According to the present invention, the negative electrode includes the silicon-based active material in the second active material layer which is a middle layer, and silicon is only included in the second active material layer, and is not included in the first active material layer and the third active material layer.

Only inclusion of silicon included in the second active material layer may render to decrease the expansion of silicon during charging and discharging and depletion of an electrolyte, so that the cycle-life characteristic may be improved and the high capability characteristic may be improved.

As the first active material layer includes the first crystalline carbon as the first active material and the third active material layer includes the fourth crystalline carbon as the third active material, the adherence of the electrode may be improved, thereby readily transferring electrons and strengthening intercalating and deintercalating of lithium ions, so that it may more effectively improve high capability than amorphous carbon.

If silicon is included in the first active material layer, the deformation of the current collector due to the expansion of silicon may be occurred. If silicon is included in the third active material layer, the deterioration in the cycle-life characteristics and high capability due to the expansion of silicon may occur.

In one embodiment, an amount of silicon may be 0.6 wt% to 9 wt%, 2.5 wt% to 8 wt%, or 1.8 wt% to 4.8 wt% based on the total, 100 wt% of the negative active material layer. This indicates 0.6 wt% to 9 wt% based on the total, 100 wt%, when the total amount of the first active material layer, the second active material layer, and the third active material layer is considered as 100 wt%. Furthermore, the amount of the silicon refers to an amount of silicon in the silicon-based active material. When the amount of silicon is within the range, the cycle-life characteristic may be further improved.

An amount of silicon included in the second active material layer may be 1.8 wt% to 27 wt%, or 5.4 wt% to 14.4 wt%, when the amount of the second active material layer is considered to as 100 wt%. Furthermore, the amount of the silicon refers to an amount included in the silicon-based active material. When the amount of the silicon is within the range, the expansion of silicon may be further effectively suppressed.

In one embodiment, a thickness ratio of the first active material layer, the second active material layer, and the third active material layer may be 1:1 to 49:1 to 49, and a thickness ratio of the first active material layer, the second active material layer, and the third active material layer may be 1:1 to 1.5:1 to 1.5. When the thickness ratio of the first active material layer, the second active material layer, and the third active material layer is within the range, three layers may be uniformly formed, thereby maximizing effects for preventing the volume expansion of silicon.

The first active material included in the first active material layer may be a first crystalline carbon, and the first crystalline carbon may be natural graphite showing similar properties to artificial graphite, and including natural graphite in which a plurality of primary particles are agglomerated. Further, the first crystalline carbon includes amorphous carbon positioned on a surface of the primary particles, and a coating layer including amorphous carbon is surrounding the secondary particle.

The primary particle may have a particle diameter of 5 µm to 15 µm, and the secondary particle may have a particle diameter of 8 µm to 24 µm. When the average particle diameter of the primary particle is within the range, it may suitably prepared and the better cycle-life characteristic may be exhibited. When the particle diameter of the secondary particle is satisfied in the range, the impregnation of the electrolyte may suitably occur. Furthermore, when the particle diameters of the primary particle and the secondary particle are within the range, the expansion of the negative active material may be more effectively suppressed, and a tap density of the negative active material may be increased.

The primary particle may have a particle diameter of 5 µm to 15 µm, for example, 5 µm to 13 µm, 5 µm to 12 µm, or 5.5 µm to 11.5 µm, and the secondary particle may have a particle diameter of 8 µm to 24 µm, for example, 10 µm to 24 µm, 11 µm to 24 µm, 12 µm to 24 µm, 13 µm to 24 µm, 13 µm to 23 µm, or 13 µm to 20 µm. The particles of the primary particle and the secondary particle refers to an average particle diameter D50.

As used herein, an average particle diameter refers to a particle diameter (D50) where a cumulative volume is about 50 volume% in a particle distribution and measured by PSA (particle size analyzer) to which a plurality of particles are added. The average particle diameter (D50) of the particles may be measured by laser diffraction (LD). The method may be performed according to ISO 13320-1. According to the IUPAC definition, the equivalent diameter of a non-spherical particle is equal to a diameter of a spherical particle that exhibits identical properties to that of the investigated non-spherical particle.

The secondary particle is obtained from agglomerating a plurality of primary particles, the numbers of the primary particle are not particularly limited, as long as it is possible to prepare a secondary particle, but, for example, 2 primary particles to 50 primary particles, 2 primary particles to 40 primary particles, 2 primary particles to 30 primary particles, 2 primary particles to 20 primary particles, 2 primary particles to 10 primary particles, or 2 primary particles to 4 primary particles may be agglomerated to prepare a secondary particle.

The natural graphite may be flaky-shaped (scale-type, scale shaped, or flake shaped) natural graphite.

The first crystalline carbon includes a coating layer including amorphous carbon surrounding the secondary particle and amorphous carbon positioned on the surface of the primary particle. The addition/ coatings of amorphous carbon to/on the surface of the primary particle (inside of the secondary particle) and the secondary particle of natural graphite a decrease in a pore volume fraction and to suppress the side reaction with the electrolyte, so that charge and discharge capability may be further improved.

In the first crystalline carbon, a mixing ratio of natural graphite and amorphous carbon may be 90:10 to 75:25, for example, 90:10 to 80:20, 90:10 to 85:15, or 90:10 to 88:12 by weight ratio. In the case of satisfying the range, the side reaction with the electrolyte may be further effectively suppressed, and the charge and discharge capability may be further improved.

The coating layer including amorphous carbon may have a thickness of 5 nm to 50 nm, for example, 10 nm to 50 nm, or 20 nm to 50 nm. When the thickness of the coating layer is within the range, the side reaction with the electrolyte may be further suppressed and the charge and discharge rate capability may be further improved.

The amorphous carbon may be at least one selected from soft carbon, hard carbon, mesophase pitch carbide, sintered cokes, or a mixture thereof.

The first crystalline carbon of the first active material may be a peak intensity ratio I(002)/I(110) of 120 or less, for example, 110 or less, 105 or less, or about 100 or less, measured by an X-ray diffraction analysis using a CuKα-ray. The peak intensity ratio I(002)/I(110) refers to a ratio of the diffraction peak intensity I(002) to the diffraction peak intensity I(110) measured by an X-ray diffraction analysis of the first crystalline carbon and is an index relating to the orientation of the first active material layer of the first active material particle. As the peak intensity ratio I(002)/I(110) is smaller, the crystallite orientation of the first active material particle is random, and as the peak intensity ratio is increased, the crystallite is parallel to the fist first active material layer. That is, smaller of the peak intensity causes to randomly orient the edge of natural graphite, thereby increasing non-orientation of the negative active material. Accordingly, lithium ions are easily intercalated/ deintercalated to inside of the secondary particle of natural graphite secondary particle, and thus capacity characteristics and charge and discharge rate capability characteristics of the rechargeable lithium battery may be further improved.

One embodiment employs natural graphite in which crystallite is isotropically grown and natural graphite primary particles are pulverized to have a small particle size and agglomerated to prepare a secondary particle, thereby more effectively suppressing increases in the orientation degree of the crystallite during the negative electrode preparation.

When the peak intensity ratio I(002)/I(110) is satisfied in the range, the expansion ratio of the first active material is small which reduces internal pore volume and reduces the side reaction with the electrolyte, thereby further improving the cycle-life characteristics.

The second active material in the second active material layer may be a silicon-based active material, a second crystalline carbon and a third crystalline carbon. The silicon-based active material, for example, may be a silicon-carbon composite. Herein, a mixing ratio of the silicon-based active material and the second crystalline carbon and third crystalline carbon may be 1:15 weight ratio to 3:8 by weight ratio. When the mixing ratio of the silicon-based active material and the second crystalline carbon and third crystalline carbon falls in the range, the battery capacity may be further improved and the cycle-life characteristics may be further improved.

In the Si-C composite, carbon may be amorphous carbon or crystalline carbon. The composite may be an agglomerated product in which silicon and carbon are agglomerated, or an agglomerated product including a core in which silicon particles and crystalline carbon are mixed, and amorphous carbon surrounding the core. Herein, the amorphous carbon may be filled in the core.

The amorphous carbon may be pitch carbon, soft carbon, hard carbon, mesophase pitch carbide, sintered cokes, carbon fiber, or a combination thereof, and the crystalline carbon may be artificial graphite, natural graphite, or a combination thereof.

The Si particle may have a particle diameter of 10 nm to 30 µm, and according to one embodiment, may be 10 nm to 1000 nm, or in another embodiment, may be 20 nm to 150 nm. When the particle diameter of the Si particle is within the range, the volume expansion caused during charge and discharge may be suppressed, and breakage of the conductive path due to crushing of particles may be prevented.

In the Si-C composite, an amount of Si may be 30 wt% to 70 wt%, and according to one embodiment, 40 wt% to 50 wt%. An amount of carbon may be 70 wt% to 30 wt%, or according to one embodiment, may be 50 wt% to 60 wt%. When the amounts of Si and carbon are within the ranges, the high-capacity characteristic may be exhibited.

When the Si-C composite includes a core and amorphous carbon surrounding the core, the amorphous carbon may be presented in a thickness of 5 nm to 100 nm. Herein, an amount of amorphous carbon may be 1 wt% to 50 wt% based on the total, 100 wt% of the Si-C composite, an amount of Si may be 30 wt% to 70 wt% based on the total, 100 wt% of the Si-C composite, and an amount of crystalline carbon may be 20 wt% to 69 wt% based on the total, 100 wt% of the Si-C composite. An amount of amorphous carbon may be the sum of the amount of amorphous carbon surrounded on the core and amorphous carbon filled in the core.

The second crystalline carbon may be the same as the aforementioned crystalline carbon, and the third crystalline carbon may be artificial graphite.

A mixing of the second crystalline carbon and the third crystalline carbon may be also 1:1 to 1:9 by weight ratio. When the mixing ratio of the second crystalline carbon and the third crystalline carbon falls in the range, high-rate characteristics may be further improved and the long cycle-life characteristic may be improved.

The third active material in the third active material layer may be a fourth crystalline carbon. The fourth crystalline carbon may be natural graphite, artificial graphite, or a combination thereof.

The first active material layer, the second active material layer, and the third active material layer may further include a binder, respectively, and a conductive material, respectively.

In the first active material layer, the second active material layer, and the third active material layer, an amount of each negative active material may be 90 wt% to 99 wt%, or 94 wt% to 99 wt% based on the total, 100 wt% of the active material layer.

Furthermore, in the first active material layer, the second active material layer, and the third active material layer, an amount of the binder in the first active material layer, the second active material layer, and the third active material layer may be 0.5 wt% to 5 wt%, or 0.5 wt% to 3 wt% based on the total, 100 wt% of each active material layer. In the first active material layer, the second active material layer, and the third active material layer, an amount of the conductive material may be 0.5 wt% to 5 wt%, or 0.5 wt% to 3 wt% based on the total, 100 wt% of each active material layer.

The binder improves binding properties of negative electrode active material particles with one another and with a current collector. The binder may be an aqueous binder, a non-aqueous binder, or a combination thereof.

The non-aqueous binder may be an ethylene propylene copolymer, polyacrylonitrile, polystyrene, polyvinyl chloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The aqueous binder may be a styrene-butadiene rubber (SBR), an acrylated styrene-butadiene rubber (ABR), an acrylonitrile-butadiene rubber, an acryl rubber, a butyl rubber, a fluorine rubber, an ethylene oxide-containing polymer, polyvinylpyrrolidone, polypropylene, polyepichlorohyrin, polyphosphazene, ethylene propylene diene copolymer, polyvinylpyridine, chlorosulfonated polyethylene, latex, a polyester resin, an acryl resin, a phenol resin, an epoxy resin, polyvinyl alcohol, or a combination thereof.

When the binder uses the aqueous binder, a cellulose-based compound may be further used to provide viscosity as a thickener. The cellulose-based compound includes one or more of carboxymethyl cellulose, hydroxypropyl methyl cellulose, methyl cellulose, or alkali metal salts thereof. The alkali metal may be Na, K, or Li. The cellulose-based compound may be included in an amount of about 0.1 parts by weight to about 3 parts by weight based on 100 parts by weight of the negative active material.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereof.

Another embodiment provides a rechargeable lithium battery including the negative electrode, a positive electrode, and an electrolyte.

The positive electrode includes a current collector and a positive active material layer formed on the current collector. The positive active material may include lithiated intercalation compounds that reversibly intercalate and deintercalate lithium ions. Specifically, one or more composite oxides of a metal selected from cobalt, manganese, nickel, and a combination thereof, and lithium may be used. More specifically, the compounds represented by one of the following chemical formulae may be used. LiₐA_{1-b}X_{b}D₂ (0.90 ≤ a ≤1.8, 0 ≤ b ≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}D_{c} (0.90 ≤ a ≤ 1.8, 0 ≤ b ≤ 0.5, 0 ≤ c ≤ 0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}D_{α} (0.90 ≤ a ≤ 1.8, 0 ≤ b ≤ 0.5, 0 ≤ c ≤ 0.5, 0 < α ≤ 2); LiₐNi_{1-b-c}Co_{b}X_{c}O_{2-α}T_{α} (0.90 ≤ a ≤ 1.8, 0 ≤ b ≤ 0.5, 0 ≤ c ≤0.5, 0 < α < 2); LiₐNi_{1-b-c}Co_{b}X_{c}O_{2-α}T₂ (0.90 ≤ a ≤ 1.8, 0 ≤ b ≤ 0.5, 0 ≤ c ≤0.5, 0 < α < 2); LiₐNi_{1-b-c}Mn_{b}X_{c}D_{α} (0.90 ≤a ≤1.8, 0 ≤ b ≤ 0.5, 0 ≤ c ≤ 0.5, 0 < α ≤ 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2); LiₐNi_{1-b-c}MnsX_{c}O₂₋ₐT₂ (0.90 ≤ a ≤ 1.8, 0 ≤ b ≤ 0.5, 0 ≤ c ≤ 0.5, 0 < α < 2); LiₐNi_{b}E_{c}G_{d}O₂ (0.90 ≤ a ≤ 1.8, 0 ≤ b ≤ 0.9, 0 ≤ c ≤0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNi_{b}Co_{c}Al_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNi_{b}Co_{c}Mn_{d}GₑO₂ (0.90 ≤ a ≤ 1.8, 0 ≤ b ≤ 0.9, 0 ≤ c <_ 0.5, 0 ≤ d ≤ 0.5, 0.001 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS2; V205; LiV205; LiZO₂; LiNiVO₄; Li _{(3-f)}J₂(PO₄)₃ (0 ≤ f ≤ 2); Li _{(3-f)}Fe₂(PO₄)₃ (0 ≤ f ≤ 2); LiₐFePO₄ (0.90 ≤ a ≤ 1.8)

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In an embodiment, the positive active material layers may further include a binder and a conductive material. Herein, the amounts of the binder and the conductive material may be respectively, about 1 wt% to about 5 wt% based on the total amount of the positive active material layer.

The binder improves binding properties of positive active material particles with one another and with a current collector. Examples thereof may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene- butadiene rubber, an epoxy resin, nylon, and the like, but is not limited thereto.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, a carbon fiber and the like; a metal-based material of a metal powder or a metal fiber including copper, nickel, aluminum, silver, and the like; a conductive polymer such as a polyphenylene derivative; or a mixture thereof.

The current collector may be Al, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, caprolactone, and the like. The ether-based solvent may include dibutyl ether, tetraglyme, diglyme, dimethoxy ethane, 2-methyltetrahydrofuran, tetrahydrofuran, and the like. The ketone-based solvent may include cyclohexanone, and the like. The alcohol-based solvent may include ethyl alcohol, isopropyl alcohol, and the like, and examples of the aprotic solvent may include nitriles such as R-CN (where R is a C2 to C20 linear, branched, or cyclic hydrocarbon, or may include a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance and it may be well understood to one of ordinary skill in the related art.

The carbonate-based solvent may include a mixture of a cyclic carbonate and a linear carbonate. The cyclic carbonate and linear carbonate are mixed together in a volume ratio of about 1:1 to about 1:9. When the mixture is used as an electrolyte, it may have enhanced performance.

The organic solvent may further include an aromatic hydrocarbon-based solvent as well as the carbonate-based solvent. Herein, the carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1. 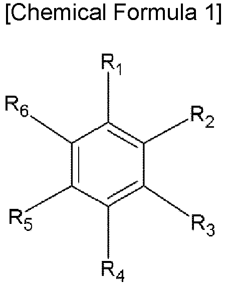 (In Chemical Formula 1, R₁ to R₆ are the same or different and are selected from hydrogen, a halogen, a C1 to C10 alkyl group, a haloalkyl group, and a combination thereof.)

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylethyl carbonate, vinylene carbonate, or an ethylene carbonate-based compound represented by Chemical Formula 2, as an additive for improving cycle life. 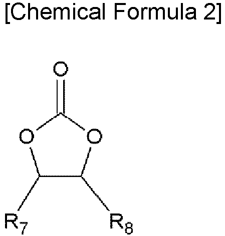 (In Chemical Formula 2, R₇ and R₈ are the same or different and may each independently be hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.)

Examples of the ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. In case of further using the additive for improving cycle life, an amount of the additive may be suitably controlled within an appropriate range.

The lithium salt dissolved in an organic solvent supplies a battery with lithium ions, basically operates the rechargeable lithium battery, and improves transportation of the lithium ions between positive and negative electrodes. Examples of the lithium salt may include one or two selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAIO₂, LiAlCl₄, LiPO₂F₂, LiN(CₓF₂ₓ₊₁SO₂)(C_{y}F_{2y+1}SO₂), where x and y are a natural numbers, for example, an integer of about 1 to about 20, lithium difluoro(bisoxolato) phosphate), LiCl, Lil, LiB(C₂O₄)₂ (lithium bis(oxalato) borate: LiBOB), and lithium difluoro(oxalato)borate (LiDFOB), as a supporting electrolytic salt. A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

A separator may be disposed between the positive electrode and the negative electrode depending on a type of a rechargeable lithium battery. The separator may use polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

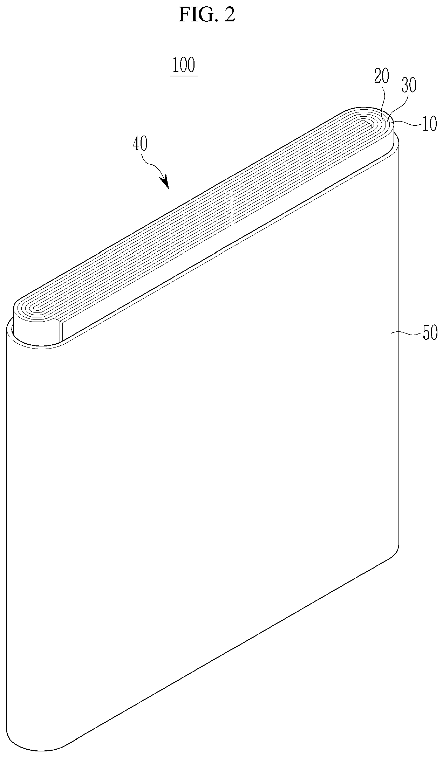

FIG. 2 is an exploded perspective view of a rechargeable lithium battery according to an embodiment of the present invention. The rechargeable lithium battery according to an embodiment is illustrated as a prismatic battery but is not limited thereto and may include variously-shaped batteries such as a cylindrical battery, a pouch battery, and the like.

Referring to FIG. 2, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20, and the separator 30.

Hereinafter, examples of the present invention and comparative examples are described. These examples, however, are not in any sense to be interpreted as limiting the scope of the invention.

### (Example 1)

Natural graphite having a particle diameter of greater than or equal to about 80 µm was ground to small-size primary particles having a particle diameter D50 of 7 µm by airstream grinding. The small-size primary particles were processed to secondary particles having an average particle diameter D50 of 15.6 µm using spheroidizing equipment. Pitch carbon was added to the secondary particle and heat-treated at a 1,200 °C sintering furnace for 2 hours to prepare a carbon-based material. Herein, the added amount of the pitch carbon was adjusted in order to have a weight ratio of 90/10 of natural graphite/ amorphous carbon of the prepared active material. The prepared active material included natural graphite including secondary particles in which a plurality of primary particles were agglomerated, with soft carbon positioned on the surface of the primary particles, and a soft carbon coating layer surrounded on the secondary particles.

The carbon-based material was used as a first active material, and 97.4 wt% of the first active material, 0.9 wt% of carboxymethyl cellulose, and 1.7 wt% of styrene-butadiene rubber were mixed in pure water to prepare a first active material layer slurry.

97.4 wt% of a Si-C composite and a mixture of the prepared carbon-based material and artificial graphite (Si-C composite:(the prepared carbon-based material and artificial graphite)=1:4 by weight ratio, a mixing ratio of the prepared carbon-based material: artificial graphite=1:1 by weight ratio) as a second active material, 0.9 wt% of carboxymethyl cellulose, and 1.7 wt% of styrene-butadiene rubber were mixed in pure water to prepare a second active material layer slurry. Herein, The Si-C composite included a core including artificial graphite and silicon particles and a soft carbon coated on the surface of the core. The soft carbon coating layer had a thickness of 20 nm, and the silicon particles had an average particle diameter D50 of 100 nm.

97 wt% of an artificial graphite third active material, 1 wt% of ketjen black, 1 wt% of carboxymethyl cellulose, and 1 wt% of styrene-butadiene rubber were mixed in pure water to prepare a third active material layer slurry.

The first active material slurry, the second active material slurry, and the third active material slurry were sequentially coated on the Cu foil current collector, dried, and pressurized to prepare a negative electrode including a negative active material layer including a first active material layer, a second active material layer, and a third active material layer. Herein, a thickness ratio of the first active material layer, the second active material layer, and the third active material layer was adjusted until it was to 1:1:1.

In the prepared negative electrode, the amount of silicon was 4.2 wt% based on the total, 100 wt% of the negative active material layer.

Using the negative electrode, a polyethylene/polypropylene separator, a LiCoO₂ positive electrode, and an electrolyte, a cell having a capacity of 36 mAh (model: SLPC) was fabricated.

As the electrolyte, 1.5 M LiPF₆ dissolved ethylene carbonate, ethylmethyl carbonate and dimethyl carbonate (20:10:70 volume ratio), was used.

### (Example 2)

A negative electrode was prepared by the same procedure as in Example 1, except that coating amounts of the first active material layer slurry, the second active material layer slurry, and the third active material layer slurry were changed to prepare a negative active material layer until the thickness ratio of the first active material layer, the second active material layer, and the third active material layer was 1:1.5:1.

In the prepared negative electrode, the amount of silicon was 4.2 wt% based on the total, 100 wt% of the negative active material layer.

Using the negative electrode, a cell was fabricated by the same procedure as in Example 1.

### (Comparative Example 1)

The first active material slurry, the third active material slurry, and the second active material slurry were sequentially coated on the Cu foil current collector, and dried and pressurized to prepare a negative electrode including a negative active material layer including a first active material layer, a third active material layer, and a second active material layer. Herein, a thickness ratio of the first active material layer, the third active material layer, and the second active material layer was adjusted until it was to 1:1:1. That is, in the prepared negative electrode, the second active material layer including the Si-C was positioned on the outmost surface. In the prepared negative electrode, the amount of silicon was 4.2 wt% based on the total, 100 wt% of the negative active material layer.

Using the negative electrode, a cell was fabricated by the same procedure as in Example 1.

### (Comparative Example 2)

The second active material slurry, the first active material slurry, and the third active material slurry were sequentially coated on the Cu foil current collector, dried, and pressurized to prepare a negative electrode including a negative active material layer including a second active material layer, a first active material layer, and a third active material layer. Herein, a thickness ratio of the second active material layer, the first active material layer, and the third active material layer was adjusted until it was 1:1:1. That is, in the prepared negative electrode, the second active material layer including the Si-C was positioned in contact with the current collector. In the prepared negative electrode, the amount of silicon was 4.2 wt% based on the total, 100 wt% of the negative active material layer.

Using the negative electrode, a cell was fabricated by the same procedure as in Example 1.

### Experimental Example 1) Evaluation of cycle-life characteristics at room temperature

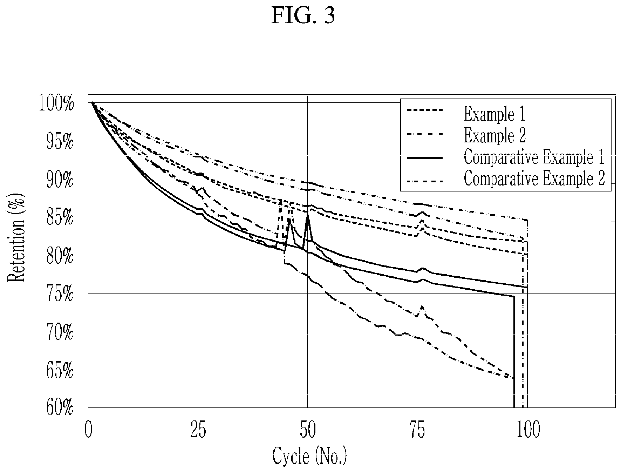

The cells according to Examples 1 and 2 and Comparative Examples 1 and 2 were charged at 0.5 C and discharged at 0.5 C under room temperature (25 °C) for 100 cycles. A ratio (%) of discharge capacity at the 100^{th} to discharge capacity at the 1^{st} was measured. The results are shown in FIG. 3.

A ratio of charge capacity at each cycle to charge capacity at the 1^{st} was measured. The results are shown in FIG. 3. The results shown in FIG. 3 were are obtained from the two cells in each of the examples and the comparative examples, and thus, there are two results for each of the examples and the comparative examples.

As shown in FIG. 3, the half-cell of Example 1 exhibited capacity retention of about 83 %, even though the charge and the discharge were performed for about 100 cycles, but Comparative Example 1 exhibited capacity retention of about 79 % at about 75 charge and discharge cycles, and Comparative Example 2 exhibited very low capacity retention of about 73%.

### Experimental Example 2) Evaluation of high-rate characteristic

The cells of Examples 1 and 2 and Comparative Examples 1 and 2 were charged and discharged for 3 cycles in which they were charged under a condition of a constant current/constant voltage, 0.1 C, 4.3 V and 0.05 C cut-off, rested for 10 minutes, discharged under a condition of a constant current, 0.2 C, 2.8 V cut-off constant current/constant voltage, and rested for 10 minutes. Thereafter, while the C-rate of the discharge condition was changed at 0.5 C, 1.0 C, 1.5 C, 2 C, 2.5 C, and 0.2 C, charging and discharging at each C-rate were performed for 3 cycles.

A ratio of discharge capacity at each cycle to discharge capacity at the 1^{st} at each C-rate were measured. The results are shown in Table 1.

**Table 1**

| | 0.2 C | 0.5 C | 1.0 C | 1.5 C | 2.0 C | 2.5 C | 0.2 C |
|---|---|---|---|---|---|---|---|
| Example 1 | 100 % | 94 % | 83 % | 55 % | 37 % | 27 % | 90 % |
| Example 2 | 100 % | 96 % | 85 % | 56 % | 37 % | 27 % | 93 % |
| Comparative Example 1 | 100 % | 91 % | 83 % | 56 % | 34 % | 22 % | 82 % |
| Comparative Example 2 | 100 % | 92 % | 80 % | 55 % | 37 % | 26 % | 88 % |

As shown in Table 1, the cells according to Examples 1 and 2 exhibited superior capacity retention at all C-rates, particularly, high rates, than Comparative Examples 1 and 2, and superior capacity retention at the last 0.2 C which indicated better capacity recovery.

## Claims

1. A negative electrode (20) for a rechargeable lithium battery (100), comprising:
a current collector (3); and
a negative active material layer comprising a first active material layer (5), a second active material layer (7), and a third active material layer (9),
wherein the first active material layer (5) is positioned to contact the current collector (3) and the second active material layer (7) is positioned between the first active material layer (5) and the third active material layer (9),
the first active material layer (5) comprises a first active material of first crystalline carbon,
the second active material layer (7) comprises a second active material which includes a silicon-based active material, a second crystalline carbon, and a third crystalline carbon, and the third active material layer (9) comprises a third active material of fourth crystalline carbon, wherein silicon is only included in the second active material layer.

2. The negative electrode for a rechargeable lithium battery of claim 1, wherein an amount of silicon is 0.6 wt% to 9 wt% based on the total, 100 wt% of the negative active material layer.

3. The negative electrode for a rechargeable lithium battery of claim 1 or 2, wherein a thickness ratio of the first active material layer (5), the second active material layer (7), and the third active material layer (9) is 1:1 to 49:1 to 49.

4. The negative electrode for a rechargeable lithium battery of claim 3, wherein a thickness ratio of the first active material layer (5), the second active material layer (7), and the third active material layer (9) is 1:1 to 1.5:1 to 1.5.

5. The negative electrode for a rechargeable lithium battery of any one of the preceding claims, wherein the first crystalline carbon and/or the second crystalline carbon is a natural graphite comprising secondary particles in which a plurality of primary particles are agglomerated and in which a coating layer comprising amorphous carbon is surrounding the secondary particles.

6. The negative electrode for a rechargeable lithium battery of claim 5,
wherein the primary particles have an average particle diameter D50 of 5 µm to 15 µm and the secondary particles have an average particle diameter D50 of 8 µm to 24 µm, measured by laser diffraction.

7. The negative electrode for a rechargeable lithium battery of claim 5 or 6, wherein a peak intensity ratio I(002)/I(110) of the first crystalline carbon and/or the second crystalline carbon is 120 or less, when measured by XRD using a CuKa-ray.

8. The negative electrode for a rechargeable lithium battery of any one of claims 5 to 7, wherein amorphous carbon is positioned on the surface of the primary particles.

9. The negative electrode for a rechargeable lithium battery of any one of the preceding claims, wherein a mixing ratio of the second crystalline carbon and the third crystalline carbon is 1:1 to 1:9 by weight ratio.

10. The negative electrode for a rechargeable lithium battery of any one of the preceding claims, wherein the third crystalline carbon is artificial graphite.

11. The negative electrode for a rechargeable lithium battery of any one of the preceding claims, wherein the fourth crystalline carbon is artificial graphite, natural graphite, or a combination thereof.

12. A rechargeable lithium battery (100), comprising
a negative electrode (20) of any one of the preceding claims;
a positive electrode (10); and
an electrolyte.

## Patentansprüche

1. Negative Elektrode (20) für eine wiederaufladbare Lithiumbatterie (100), umfassend:
einen Stromkollektor (3); und
eine negative Aktivmaterialschicht, umfassend eine erste Aktivmaterialschicht (5), eine zweite Aktivmaterialschicht (7) und eine dritte Aktivmaterialschicht (9),
wobei die erste Aktivmaterialschicht (5) so positioniert ist, dass sie den Stromkollektor (3) berührt, und die zweite Aktivmaterialschicht (7) zwischen der ersten Aktivmaterialschicht (5) und der dritten Aktivmaterialschicht (9) positioniert ist,
die erste Aktivmaterialschicht (5) ein erstes Aktivmaterial aus erstem kristallinen Kohlenstoff umfasst,
die zweite Aktivmaterialschicht (7) ein zweites Aktivmaterial umfasst, das ein siliziumbasiertes Aktivmaterial, einen zweiten kristallinen Kohlenstoff und einen dritten kristallinen Kohlenstoff beinhaltet, und die dritte Aktivmaterialschicht (9) ein drittes Aktivmaterial aus viertem kristallinen Kohlenstoff umfasst, wobei Silizium nur in der zweiten Aktivmaterialschicht enthalten ist.

2. Negative Elektrode für eine wiederaufladbare Lithiumbatterie nach Anspruch 1, wobei eine Menge an Silizium 0,6 Gew.-% bis 9 Gew.-% basierend auf den gesamten 100 Gew.-% der negativen Aktivmaterialschicht beträgt.

3. Negative Elektrode für eine wiederaufladbare Lithiumbatterie nach Anspruch 1 oder 2, wobei ein Dickenverhältnis der ersten Aktivmaterialschicht (5), der zweiten Aktivmaterialschicht (7) und der dritten Aktivmaterialschicht (9) 1:1 bis 49:1 bis 49 beträgt.

4. Negative Elektrode für eine wiederaufladbare Lithiumbatterie nach Anspruch 3, wobei das Dickenverhältnis der ersten Aktivmaterialschicht (5), der zweiten Aktivmaterialschicht (7) und der dritten Aktivmaterialschicht (9) 1:1 bis 1,5:1 bis 1,5 beträgt.

5. Negative Elektrode für eine wiederaufladbare Lithiumbatterie nach einem der vorhergehenden Ansprüche, wobei der erste kristalline Kohlenstoff und/oder der zweite kristalline Kohlenstoff ein natürlicher Graphit ist, der Sekundärpartikel umfasst, in denen eine Vielzahl von Primärpartikeln agglomeriert ist und in denen eine Beschichtungsschicht, die amorphen Kohlenstoff umfasst, die Sekundärpartikel umgibt.

6. Negative Elektrode für eine wiederaufladbare Lithiumbatterie nach Anspruch 5, wobei die Primärpartikel einen mittleren Partikeldurchmesser D50 von 5 µm bis 15 µm und die Sekundärpartikel einen mittleren Partikeldurchmesser D50 von 8 µm bis 24 µm, gemessen durch Laserbeugung, aufweisen.

7. Negative Elektrode für eine wiederaufladbare Lithiumbatterie nach Anspruch 5 oder 6, wobei ein Spitzenintensitätsverhältnis I(002)/I(110) des ersten kristallinen Kohlenstoffs und/oder des zweiten kristallinen Kohlenstoffs 120 oder weniger beträgt, wenn es mittels XRD unter Verwendung eines CuKa-Strahls gemessen wird.

8. Negative Elektrode für eine wiederaufladbare Lithiumbatterie nach einem der Ansprüche 5 bis 7, wobei amorpher Kohlenstoff auf der Oberfläche der Primärpartikel positioniert ist.

9. Negative Elektrode für eine wiederaufladbare Lithiumbatterie nach einem der vorhergehenden Ansprüche, wobei ein Mischungsverhältnis des zweiten kristallinen Kohlenstoffs und des dritten kristallinen Kohlenstoffs 1:1 bis 1:9 nach Gewichtsverhältnis beträgt.

10. Negative Elektrode für eine wiederaufladbare Lithiumbatterie nach einem der vorhergehenden Ansprüche, wobei der dritte kristalline Kohlenstoff künstlicher Graphit ist.

11. Negative Elektrode für eine wiederaufladbare Lithiumbatterie nach einem der vorhergehenden Ansprüche, wobei der vierte kristalline Kohlenstoff künstlicher Graphit, natürlicher Graphit oder eine Kombination davon ist.

12. Wiederaufladbare Lithiumbatterie (100), umfassend
eine negative Elektrode (20) nach einem der vorhergehenden Ansprüche;
eine positive Elektrode (10); und
einen Elektrolyten.

## Revendications

1. Électrode négative (20) pour une batterie au lithium rechargeable (100), comportant :
un collecteur de courant (3) ; et
une couche de matériau actif négatif comportant une première couche de matériau actif (5), une deuxième couche de matériau actif (7) et une troisième couche de matériau actif (9),
dans laquelle la première couche de matériau actif (5) est positionnée pour entrer en contact avec le collecteur de courant (3) et la deuxième couche de matériau actif (7) est positionnée entre la première couche de matériau actif (5) et la troisième couche de matériau actif (9),
la première couche (5) de matériau actif comporte un premier matériau actif de premier carbone cristallin,
la deuxième couche de matériau actif (7) comporte un deuxième matériau actif qui inclut un matériau actif à base de silicium, un deuxième carbone cristallin et un troisième carbone cristallin, et la troisième couche de matériau actif (9) comporte un troisième matériau actif de quatrième carbone cristallin, dans laquelle le silicium n'est inclus que dans la deuxième couche de matériau actif.

2. Électrode négative pour une batterie au lithium rechargeable selon la revendication 1, dans laquelle une quantité de silicium est de 0,6 % en poids à 9 % en poids sur la base du total de 100 % en poids de la couche de matériau actif négatif.

3. Électrode négative pour une batterie au lithium rechargeable selon la revendication 1 ou 2, dans laquelle un rapport d'épaisseur de la première couche de matériau actif (5), de la deuxième couche de matériau actif (7) et de la troisième couche de matériau actif (9) est de 1:1 à 49:1 à 49.

4. Électrode négative pour une batterie au lithium rechargeable selon la revendication 3, dans laquelle un rapport d'épaisseur de la première couche de matériau actif (5), de la deuxième couche de matériau actif (7) et de la troisième couche de matériau actif (9) est de 1:1 à 1,5:1 à 1,5.

5. Électrode négative pour une batterie au lithium rechargeable selon l'une quelconque des revendications précédentes, dans laquelle le premier carbone cristallin et/ou le deuxième carbone cristallin sont un graphite naturel comportant des particules secondaires dans lequel une pluralité de particules primaires sont agglomérées et dans lequel une couche de revêtement comportant du carbone amorphe entoure les particules secondaires.

6. Électrode négative pour une batterie au lithium rechargeable selon la revendication 5,
dans laquelle les particules primaires ont un diamètre particulaire moyen D50 de 5 µm à 15 µm et les particules secondaires ont un diamètre particulaire moyen D50 de 8 µm à 24 µm, mesurés par diffraction laser.

7. Électrode négative pour une batterie au lithium rechargeable selon la revendication 5 ou 6, dans laquelle un rapport d'intensité de pic I(002)/I(110) du premier carbone cristallin et/ou du deuxième carbone cristallin est de 120 ou moins, lorsqu'il est mesuré par XRD à l'aide d'une raie CuKα.

8. Électrode négative pour une batterie au lithium rechargeable selon l'une quelconque des revendications 5 à 7, dans laquelle du carbone amorphe est positionné sur la surface des particules primaires.

9. Électrode négative pour une batterie au lithium rechargeable selon l'une quelconque des revendications précédentes, dans laquelle un rapport de mélange du deuxième carbone cristallin et du troisième carbone cristallin est de 1:1 à 1:9 en rapport en poids.

10. Électrode négative pour une batterie au lithium rechargeable selon l'une quelconque des revendications précédentes, dans laquelle le troisième carbone cristallin est un graphite artificiel.

11. Électrode négative pour une batterie au lithium rechargeable selon l'une quelconque des revendications précédentes, dans laquelle le quatrième carbone cristallin est un graphite artificiel, un graphite naturel ou une combinaison de ceux-ci.

12. Batterie au lithium rechargeable (100), comportant :
une électrode négative (20) selon l'une quelconque des revendications précédentes ;
une électrode positive (10) ; et
un électrolyte.
